(19) Europäisches Patentamt
European Patent Office
Office européen des brevets

(11) **EP 3 896 842 B1**

(12) **EUROPEAN PATENT SPECIFICATION**

(45) Date of publication and mention
of the grant of the patent:
**24.05.2023 Bulletin 2023/21**

(21) Application number: **19897304.2**

(22) Date of filing: **20.09.2019**

(51) International Patent Classification (IPC):
**H02P 21/05** (2006.01)    **H02P 23/22** (2016.01)
**H02P 23/04** (2006.01)    **H02P 29/50** (2016.01)

(52) Cooperative Patent Classification (CPC):
**H02P 23/22; H02P 21/05; H02P 23/04; H02P 29/50**

(86) International application number:
**PCT/CN2019/106825**

(87) International publication number:
**WO 2020/119208 (18.06.2020 Gazette 2020/25)**

(54) **METHOD FOR CONTROLLING ROTATIONAL SPEED FLUCTUATION OF SINGLE ROTOR COMPRESSOR**

VERFAHREN ZUR REGELUNG DER DREHZAHLSCHWANKUNG EINES EINZELROTORVERDICHTERS

PROCÉDÉ DE COMMANDE DE FLUCTUATION DE VITESSE DE ROTATION D'UN COMPRESSEUR À ROTOR UNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2018 CN 201811526495**

(43) Date of publication of application:
**20.10.2021 Bulletin 2021/42**

(73) Proprietor: **Qingdao Haier Air Conditioner General Corp., Ltd.**
**Qingdao, Shandong 266101 (CN)**

(72) Inventors:
• **SHI, Weipin**
**Qingdao, Shandong 266101 (CN)**
• **LIU, Guangpeng**
**Qingdao, Shandong 266101 (CN)**
• **YAO, Yongxiang**
**Qingdao, Shandong 266101 (CN)**
• **MIAO, Jian**
**Qingdao, Shandong 266101 (CN)**
• **XU, Qinyao**
**Qingdao, Shandong 266101 (CN)**
• **KOU, Qiuli**
**Qingdao, Shandong 266101 (CN)**
• **LIU, Juan**
**Qingdao, Shandong 266101 (CN)**
• **XU, Beibei**
**Qingdao, Shandong 266101 (CN)**
• **XU, Guojing**
**Qingdao, Shandong 266101 (CN)**
• **DONG, Jinsheng**
**Qingdao, Shandong 266101 (CN)**
• **LIU, Juke**
**Qingdao, Shandong 266101 (CN)**
• **CHENG, Yongfu**
**Qingdao, Shandong 266101 (CN)**
• **GAO, Baohua**
**Qingdao, Shandong 266101 (CN)**

(74) Representative: **Peters, Sebastian Martinus**
**Octrooibureau Vriesendorp & Gaade B.V.**
**Koninginnegracht 19**
**2514 AB Den Haag (NL)**

**Description**

<u>TECHNICAL FIELD</u>

The present invention belongs to the field of motor control technology, specifically, it relates to compressor control technology, and more specifically, it relates to a method for controlling speed fluctuation of single rotor compressor.

<u>BACKGROUND</u>

Severe fluctuation in speed of single rotor compressor can occur when load torque in an extremely unstable state. This is due in part to refrigerant system failure or design flaw of control method, and eventually results in unstable operation of air conditioner and additional various adverse effects. The unstable operation further produces noise much higher than threshold of the system that was designed for, even exceeds relevant standards which may deteriorate user experience. The problem is particularly obvious for a single rotor compressor.

The prior art provides methods for controlling speed fluctuation of compressor but effects are far from satisfactory and the problem of speed fluctuation of compressor is not fundamentally solved.

For example, CN 105450098 discloses a speed fluctuation suppression method for a permanent magnet synchronous motor. The method comprises the following steps: obtaining a target rotating speed and a feedback rotating speed of the permanent magnet synchronous motor, and calculating a fluctuation rotating speed of the permanent magnet synchronous motor according to the target rotating speed and the feedback rotating speed; carrying out iterative learning control on the fluctuation rotating speed to obtain a compensation speed, and superposing the compensation speed to a given rotating speed in a previous control period of the permanent magnet synchronous motor to obtain the give rotating speed in the current control period; and controlling the permanent magnet synchronous motor to suppress rotating speed fluctuation of the permanent magnet synchronous motor according to the given rotating speed of the current control period. CN 105450098 further discloses a control device for the permanent magnet synchronous motor, and a compressor control system with the control device.

<u>SUMMARY OF THE INVENTION</u>

The object of the present invention is to provide a method for controlling speed fluctuation of single rotor compressor to improve the effectiveness of suppressing the compressor speed fluctuation.

To achieve the above-mentioned purpose of the invention, the present invention adopts the following technical solutions to achieve:

A method for controlling speed fluctuation of single rotor compressor includes: a process to control the compressor according to a real-time angular velocity and a process to control the compressor according to a torque;

The process to control the compressor according to a real-time angular velocity including:

obtaining a shaft error $\Delta\theta$ which reflects a deviation of an actual position of a compressor rotor from an estimated position of a compressor rotor;

filtering the shaft error $\Delta\theta$ to obtain a corrected shaft error $\Delta\theta$ in which at least a part of a shaft error fluctuation is eliminated and obtaining an angular velocity compensation amount P_out corresponding to the corrected shaft error $\Delta\theta$;

compensating an angular velocity output $\Delta\omega$_PLL of a phase-locked loop regulator in a phase-locked loop for compressor control with the angular velocity compensation amount P_out to obtain a compensated angular velocity output $\Delta\omega$'; specifically, the compensated angular velocity output $\Delta\omega$' = P_out + $\Delta\omega$_PLL; wherein the angular velocity output $\Delta\omega$_PLL is the output of the phase-locked loop regulator with a difference between the shaft error $\Delta\Theta$ and a target angle fluctuation amount as input to the phase-locked loop regulator;

correcting the real-time angular velocity $\omega$1 which is used for compressor control according to the compensated angular velocity output and controlling the compressor according to the corrected real-time angular velocity $\omega$1 by adding the compensated angular velocity output $\Delta\omega$' to an angular velocity command to output the corrected real-time angular velocity $\omega$1 which is used for compressor control;

the step to filter the shaft error $\Delta\theta$ comprises:

expanding the shaft error $\Delta\theta$ by Fourier series to obtain a function expression of the shaft error with respect to a mechanical angle $\theta m$;

multiplying the function expression of the shaft error with $cos(\theta_{mn} + \theta_{shift-Pn})$ and $-sin(\theta_{mn} + \theta_{shift-Pn})$ respectively;

extracting a d-axis component of a nth harmonic component of $\Delta\theta$ and a q-axis component of a nth harmonic component of $\Delta\theta$ by a low-pass filter or an integrator; wherein $\theta_{mn}$ is a mechanical angle of the nth harmonic

and $\theta_{shift-Pn}$ is a phase compensation angle of the nth harmonic;

a d-axis component and a q-axis component of one or more harmonics are eliminated to complete a filtering process of the shaft error $\Delta\theta$;

the process to control the compressor according to a torque including:

calculating a difference between a target angular velocity fluctuation amount and a feedback angular velocity to obtain a first angular velocity difference; wherein the feedback angular velocity is a sum of a direct current component P_DC of the angular velocity compensation P_out and the angular velocity output $\Delta\omega$_PLL of the phase-locked loop regulator;

filtering the first angular velocity difference to obtain a filtered angular velocity in which at least a part of angular velocity fluctuation is eliminated;

inputting the filtered angular velocity as an input to a speed loop regulator in a speed loop for compressor control to obtain an output torque of the speed loop regulator;

controlling the compressor according to the output torque;

wherein the step to filter the first angular velocity difference for obtaining the filtered angular velocity in which at least a part of angular velocity fluctuation is removed further includes:

using a velocity fluctuation extraction algorithm to extract a part of angular velocity fluctuation in the first angular velocity difference, extracting a DC component of the part of angular velocity fluctuation, and calculating the difference between the first angular velocity difference and the DC component of the part of angular velocity fluctuation and the difference is determined as the filtered angular velocity.

Compared with the prior art, the advantages and positive effects of the present invention are: with the method for controlling speed fluctuation of single rotor compressor, in the phase-locked loop, fluctuation on the shaft error $\Delta\theta$ which reflects the deviation between the actual position and the estimated position of the compressor rotor is eliminated, and then the angular velocity compensation amount, which corresponds to the corrected shaft error in which at least part of fluctuation is filtered out, is added to the angular velocity output of the phase-locked loop regulator to obtain the compensated angular velocity output, and then the real-time angular velocity of the compressor is corrected according to the compensated angular velocity output; when the compressor is controlled by the corrected real-time angular velocity, it could make a variation of the target speed and a phase close to the variation and phase of the actual speed, so the operation of the compressor tends to be stable. Moreover, because fluctuation on the shaft error is a direct front-end cause to fluctuation on the speed, the elimination at the front end could reduce a periodic fluctuation on the shaft error, and the speed fluctuation could be more directly and quickly suppressed so as to improve the effectiveness of speed control. Additionally, a phase compensation angle is used to adjust the phase of the harmonic components when extracting the harmonic components in the shaft error $\Delta\theta$ so phase characteristics of the phase-locked loop are changed, which can improve the fluctuation suppression effect during the compressor operation in the full frequency domain, thereby improving the stability of the overall frequency domain operation. While in the speed loop control, the difference between the target angular velocity fluctuation amount and the feedback angular velocity is filtered in which at least a part of angular velocity fluctuation is removed, and then the filtered result is input to the speed loop regulator as an input, which is capable of reducing fluctuation on the output torque of the speed loop regulator; the compressor will be controlled according to the output torque so that fluctuation on compressor speed is reduced and the operation is more stable, which is also beneficial to energy saving and vibration reduction.

After reading the specific embodiments of the present invention in conjunction with the accompanying drawings, other features and advantages of the present invention will become clearer.

## BRIEF DESCRIPTION OF THE DRAWINGS

Fig.1 is a partial flow chart of a method for controlling speed fluctuation of single rotor compressor according to one aspect of the present invention;

Fig.2 is a partial flow chart of a method for controlling speed fluctuation of single rotor compressor according to one aspect of the present invention;

Fig.3 is a control block diagram based on the method shown in Fig.1 and Fig.2;

Fig.4 is a logical block diagram of a specific example of a shaft error fluctuation filtering algorithm in Fig.3;

Fig.5 is a logical block diagram of a specific example of a speed fluctuation extraction algorithm in Fig.3.

## DETAILED DESCRIPTION OF THE INVENTION

In order to make the objectives, technical solutions and advantages of the present invention clear, the following will further describe the present invention in detail with reference to the accompanying drawings and embodiments.

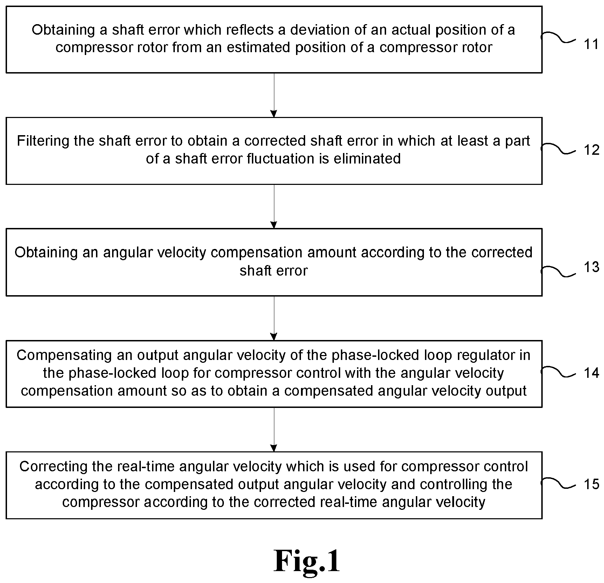

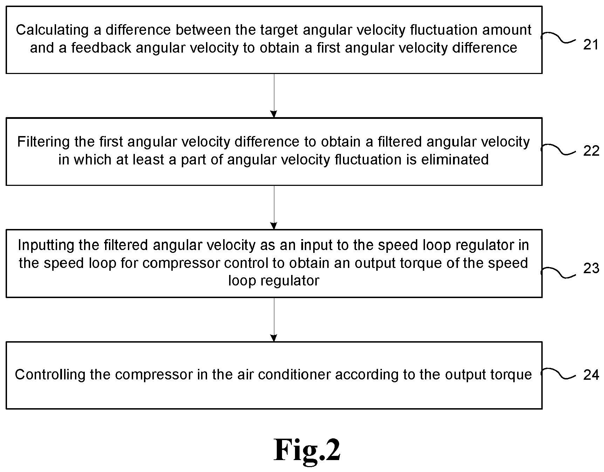

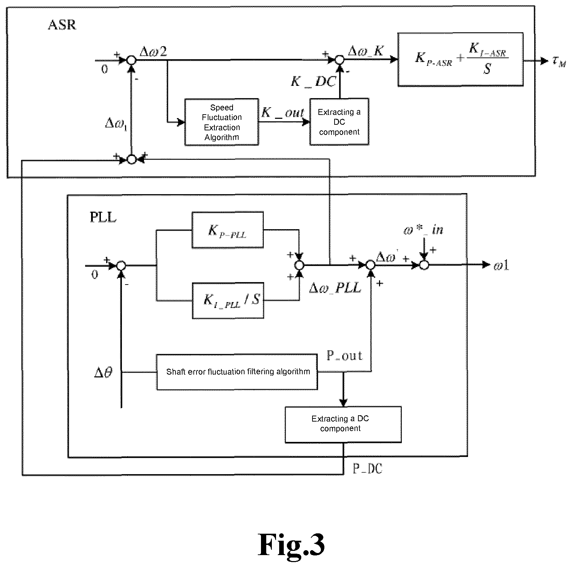

Fig.1 is a partial flow chart of a method for controlling speed fluctuation of single rotor compressor according to one aspect of the present invention and Fig.2 is another partial flow chart of the method for controlling speed fluctuation of compressor shown in Fig.1. The method for controlling speed fluctuation of compressor includes a process to control the compressor according to a real-time angular velocity, which is shown in Fig.1 and a process to control the compressor according to a torque, which is shown in Fig.2. Referring to Fig.1 and Fig.2, as well as a control block diagram shown in Fig.3, the two processes are described in detail as follows.

Fig.1 is a partial flow chart of an embodiment of a method for controlling speed fluctuation of single rotor compressor according to one aspect of the present invention; to be specific it is a flow chart of the process to control the compressor according to a real-time angular velocity. The process includes the following steps:
Step 11, obtaining a shaft error $\Delta\theta$ which reflects a deviation of an actual position of a compressor rotor from an estimated position of a compressor rotor.

Compressor control methods involve a phase-locked loop (PLL) technology to lock a phase of the compressor at a target phase. A control block diagram of PLL is shown in Fig.3. A typical phase-locked loop (PLL) of compressor in the prior art comprise a phase-locked loop regulator which is preferably realized by a proportional integral regulator, which are marked by $K_{P\_PLL}$ and $K_{I\_PLL}/S$ in Fig. 3, wherein $K_{P\_PLL}$ and $K_{I\_PLL}$ are closed-loop gain parameters of the phase-locked loop. The shaft error $\Delta\theta$ is used as a part of an input of the phase-locked loop regulator. To be specific, a difference between the shaft error $\Delta\theta$ and a target angle fluctuation amount (as an example the target angle fluctuation amount is set as 0 in Fig.3) is input to the phase-locked loop regulator and the phase-locked loop regulator outputs an angular velocity output $\Delta\omega\_PLL$, which is used by the phase-locked loop to output a real-time angular velocity $\omega1$ for the compressor control, and specifically to control a position of the compressor rotor according to the real-time angular velocity $\omega1$.

The shaft error $\Delta\theta$ reflecting the deviation of the actual position of the compressor rotor from the estimated position could be calculated by the following formula:

$$\Delta\theta = tan^{-1}\frac{V_d^* - r^*I_d + \omega_1 L_q^* I_q}{V_q^* - r^*I_q + \omega_1 L_q^* I_d}$$

wherein $V_d^*$ is a given value of a d-axis voltage of the compressor, $V_q^*$ is a given value of q-axis voltage of the compressor, $I_d$ is a real-time d-axis current of the compressor, $I_a$ is a real-time q-axis current of the compressor, $r^*$ is a motor resistance of the compressor, $L_q^*$ is a q-axis inductance of the compressor, $\omega_1$ is a real-time angular frequency of the compressor; wherein parameters $I_d$, $I_a$ and $\omega_1$ are detected in real time by detection means known in the prior art, and the other parameter values are known values.

Step 12: Filtering the shaft error $\Delta\theta$ to obtain a corrected shaft error $\Delta\theta$ in which at least a part of a shaft error fluctuation is eliminated.

Due to the fact that the shaft error is used as a part of the input of the phase-locked loop, it definitely has influence on the real-time angular velocity of the compressor output by the phase-locked loop. If the shaft error is subject to a severe fluctuation, the real-time angular velocity output by the phase-locked loop will be in variation, which further results in a problem that the rotor could not able to be held at the target phase stably which further leads to failures of the compressor such as over-current or out-of-step.

After the shaft error $\Delta\theta$ is obtained in Step 11, the step to filter the shaft error $\Delta\theta$ is disclosed so as to obtain a corrected shaft error $\Delta\theta$ in which at least a part of the shaft error fluctuation is eliminated.

Wherein the filtering of the shaft error $\Delta\theta$ includes:
Firstly, the shaft error $\Delta\theta$ is expanded by Fourier series so as to obtain a function expression of the shaft error with respect to a mechanical angle $\theta m$.

Then the function expression of the shaft error multiplies with $cos(\theta_{mn} + \theta_{shift-Pn})$ and $-sin(\theta_{mn} + \theta_{shift-Pn})$ respectively; a d-axis component of a nth harmonic component of $\Delta\theta$ and a q-axis component of a nth harmonic component of $\Delta\theta$ are extracted through a low-pass filter or an integrator; $\theta_{mn}$ is a mechanical angle of a nth harmonic component of $\Delta\theta$ and $\theta_{shift-Pn}$ is a phase compensation angle of a nth harmonic component of $\Delta\theta$.

Optionally d-axis components and q-axis components of one or more harmonics are eliminated to finish a filtering process of the shaft error $\Delta\theta$.

A detailed description of the filtering process is following with reference to Fig.3

Step 13: Obtaining an angular velocity compensation amount P_out corresponding to the corrected shaft error $\Delta\theta$.

This step could be implemented by methods disclosed in the prior art which are utilized to calculate an angular velocity according to an angle. A preferred processing method could refer to a description as follows.

The Step 12 and Step 13 are shown in the control block diagram of Fig.3, and it is to adopt a fluctuation filtering algorithm on the shaft error $\Delta\theta$ to obtain the angular velocity compensation amount P_out.

Step 14: Compensating an angular velocity output $\Delta\omega$_PLL of the phase-locked loop regulator in the phase-locked loop for compressor control with the angular velocity compensation amount P_out so as to obtain a compensated angular velocity output $\Delta\omega$'; specifically, the compensated angular velocity output $\Delta\omega$' = P_out + $\Delta\omega$_PLL.

Step 15: Correcting the real-time angular velocity ω1 which is used for compressor control according to the compensated angular velocity output and controlling the compressor according to the corrected real-time angular velocity ω1.

To be specific, a method to determine the real-time angular velocity corresponding to a target angular velocity fluctuation amount which is 0 of a speed loop control below includes: referring to Fig.3, it is specifically to add the compensated angular velocity output $\Delta\omega$' to an angular velocity command ω*_in to output the real-time angular velocity ω1 which is used for compressor control; wherein the angular velocity command w*_in is an angular velocity value given by the compressor control system, and the method for determining the value of the given angular velocity command w*_in is implemented by methods disclosed in the prior art. The method to determine the real-time angular velocity corresponding to a target angular velocity fluctuation amount which is 0 of a speed loop control, and also on the basis of the angular velocity output $\Delta\omega$_PLL of the phase-locked loop regulator and the given angular velocity command ω*_in enables the compressor control to be more accurate and stable.

Fig.2 is a partial flow chart of an embodiment of a method for controlling speed fluctuation of single rotor compressor according to one aspect of the present invention; to be specific it is a flow chart of the process to control the compressor according to a torque. The process includes the following steps:

Step 21: Calculating a difference between the target angular velocity fluctuation amount and a feedback angular velocity to obtain a first angular velocity difference; wherein the feedback angular velocity is a sum of a direct current component P_DC of the angular velocity compensation P_out and the angular velocity output $\Delta\omega$_PLL of the phase-locked loop regulator.

Compressor control methods involve a speed loop (ASR: Automatic Speed Regulator) technology to control a speed of the compressor rotor which aims at adjusting the speed of the compressor close to a set speed. Referring to the block diagram of Fig.3, the speed loop includes a speed loop regulator which is preferably a proportional integral regulator marked by $K_{P\_ASR}$ and $K_{I\_ASR}/S$ in Fig.3.

In Step 21, both of the direct current component P_DC of the angular velocity compensation amount P_out and the angular velocity output $\Delta\omega$_PLL of the phase-locked loop regulator are used as an input of the velocity loop. The step specifically includes: extracting the DC component P_DC of the angular velocity compensation amount P_out, calculating a sum of the DC component P_DC and an angular velocity output $\Delta\omega$_PLL of the phase-locked loop regulator to obtain the feedback angular velocity $\Delta\omega$1, $\Delta\omega$1=P_DC+$\Delta\omega$_PLL; wherein the extraction of the direct current component P_DC of the angular velocity compensation amount P_out can be achieved by methods for extracting the direct current component in the prior art, for example, using a low-pass filter to extract the direct current component P_DC of the angular velocity compensation amount P_out.

Then, the difference between the target angular velocity fluctuation amount and the feedback angular velocity amount $\Delta\omega$1 is calculated, and the difference between the two is determined as the first angular velocity difference $\Delta\omega$2; wherein the target angular velocity fluctuation is a desired angular velocity fluctuation which is a known input amount. In the present embodiment, the target angular velocity fluctuation amount is 0.

Step 22: Filtering the first angular velocity difference to obtain a filtered angular velocity in which at least a part of angular velocity fluctuation is eliminated.

Due to the fact that the first angular velocity difference is used as a part of the input of the speed loop regulator, it definitely has influence on an output torque output by the speed loop. If the first angular velocity difference is subject to a severe fluctuation, the output torque will be in variation, which further results in a problem that the rotor fluctuates greatly. Therefore after obtaining the first angular velocity difference in Step 22, it is preferable that the first angular velocity difference is filtered out in the first place to at least remove a part of angular velocity fluctuation and obtain the filtered angular velocity $\Delta\omega$_K.

Specifically, referring to the block diagram shown in Fig. 3, the steps that filtering the first angular velocity difference $\Delta\omega$2 to obtain the filtered angular velocity $\Delta\omega$_K in which at least a part of angular velocity fluctuation is removed includes: using the velocity fluctuation extraction algorithm to extract a part of angular velocity fluctuation K_out in the first angular velocity difference $\Delta\omega$2; extracting a DC component K_DC of the part of angular velocity fluctuation K_out; calculating the difference between the first angular velocity difference $\Delta\omega$2 and the DC component K_DC of the part of angular velocity fluctuation, and the difference is determined as the filtered angular velocity $\Delta\omega$_K. Wherein the

extraction of the DC component K_DC of the angular velocity fluctuation K_out can be realized by methods for extracting a DC component in the prior art, for example, using a low-pass filter to extract the DC component K_DC of the part of angular velocity fluctuation K_out. A more preferred filtering processing methods could refer to a detailed description as follows.

Step 23: Inputting the filtered angular velocity as an input to the speed loop regulator in the speed loop for compressor control to obtain an output torque $\tau_M$ of the speed loop regulator.

Step 24: Controlling the compressor in the air conditioner according to the output torque $\tau_M$. The specific control process could refer to methods disclosed by the prior art.

The method disclosed by the present embodiment shown in Fig.1 and Fig.2 realizes a dual-loop control, namely the speed loop and the phase-locked loop on compressor. Additionally, in the phase-locked loop, fluctuation on the shaft error Δθ which reflects the deviation between the actual position and the estimated position of the compressor rotor is eliminated, and then the angular velocity compensation amount, which corresponds to the corrected shaft error in which at least part of fluctuation is filtered out, is added to the angular velocity output of the phase-locked loop regulator to obtain the compensated angular velocity output, and then the real-time angular velocity of the compressor is corrected according to the compensated angular velocity output; when the compressor is controlled by the corrected real-time angular velocity, it could make a variation from the target speed and a phase close to the variation and phase of the actual speed, so the operation of the compressor tends to be stable. Moreover, because fluctuation on the shaft error is a direct front-end cause to fluctuation on the speed, the elimination at the front end could reduce a periodic fluctuation on the shaft error, and the speed fluctuation could be more directly and quickly suppressed so as to improve the effectiveness of speed control; while in the speed loop control, the difference between the feedback angular velocity and the target angular velocity fluctuation amount is filtered; the filtered angular velocity in which at least a part of angular velocity fluctuation is removed is input to the speed loop regulator as an input, which is capable of reducing fluctuation on the output torque of the speed loop regulator; the compressor will be controlled according to the output torque so that fluctuation on compressor speed is reduced and the operation is more stable, which is also beneficial to energy saving and vibration reduction.

In a preferable embodiment, the step to filter the shaft error Δθ to obtain the corrected shaft error Δθ' in which at least part of the shaft error fluctuation is filtered out specifically includes: filtering the shaft error Δθ to at least remove a d-axis component of and a q-axis component of the first harmonic so as to realize the filtering of the first harmonic component of Δθ and to obtain the corrected shaft error Δθ' in which at least the first harmonic component is filtered out. As a more preferred embodiment, the step to filter the shaft error Δθ to obtain the corrected shaft error Δθ' in which at least part of the shaft error fluctuation is filtered out further includes: filtering the shaft error Δθ to remove a d-axis component of and a q-axis component of the second harmonic so as to realize the filtering of the first and second harmonic component of Δθ and to obtain the corrected shaft error Δθ' in which at least the first and second harmonic components are filtered out. By means of filtering the first harmonic component in Δθ, or by means of filtering the first harmonic component and the second harmonic component, most of the fluctuation components in Δθ could be removed, and the calculation amount is acceptable and the filtering speed is fast.

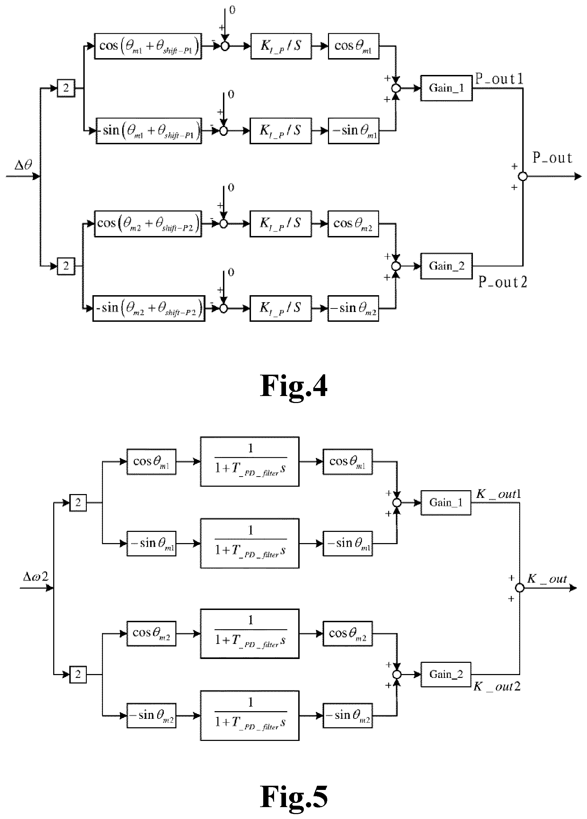

Fig.4 is a specific logical block diagram of an example of the shaft error fluctuation filtering algorithm shown in Fig.3, and to be specific is a logic block diagram to obtain the angular velocity compensation amount P_out corresponding to a corrected shaft error Δθ' in which the first harmonic component and the second harmonic component of the shaft error Δθ is removed. Shown in Fig.4, the specific process to obtain the angular velocity compensation amount P_out corresponding to a corrected shaft error Δθ' which is obtained by removing the first harmonic component and the second harmonic component of the shaft error Δθ includes:

Firstly the shaft error Δθ is expanded by Fourier series so as to obtain a function expression of the shaft error Δθ with respect to a mechanical angle $\theta_m$, especially includes:

$$\Delta\theta(\varphi) = \frac{1}{2}\Delta\theta_{DC} + \sum_{n=1}\left((\Delta\theta_{peak\_n}\cos\phi_n)\cos n\varphi - (\Delta\theta_{peak\_n}\sin\phi_n)\sin n\varphi\right)$$

$$= \frac{1}{2}\Delta\theta_{DC} + \sum_{n=1}\left(\Delta\theta_{d\_n}\cos n\varphi - \Delta\theta_{q\_n}\sin n\varphi\right)$$

wherein $\Delta\theta_{DC}$ is a direct current component of the shaft error,

$$\theta_{d\_n} = \theta_{peak\_n}\cos\phi_n \ , \ \theta_{q\_n} = \theta_{peak\_n}\sin\phi_n \ , \ \varphi = \theta_{m1}$$

$\Delta\theta_{peak\_n}$ is a fluctuation amplitude on the nth harmonic component of the shaft error; $\theta_{m1}$, $\theta_{m2}$ are the first harmonic mechanical angle and the second harmonic mechanical angle; and the second harmonic mechanical angle $\theta_{m2}$ is

expressed as: $\theta_{m2}=2\theta_{m1}$.

The first harmonic component and the second harmonic component are extracted from the function expression, and an integrator is used to remove the first harmonic component and the second harmonic component to obtain the filtering result.

To be specific either a low-pass filtering method or an integration method could be used to extract the first harmonic component and the second harmonic component from the function expression. As shown in Fig.4 the function expression is multiplied by $cos(\theta_{m1}+\theta_{shift-P1})$ and $cos(\theta_{m2}+\theta_{shift-P2})$ respectively, a result could be filtered by a low-pass filter or alternatively be input to an integrator to calculate an average of integrals within a preset period to extract the d-axis component of the first harmonic of the axis error $\Delta\theta$ and the d-axis component of the second harmonic of the axis error $\Delta\theta$; the function expression is multiplied with $-sin(\theta_{m1}+\theta_{shift-P1})$ and $-sin(\theta_{m2}+\theta_{shift-P2})$ respectively, a result could be filtered by a low-pass filter or alternatively be input to an integrator to calculate an average of integrals within a preset period to extract the q-axis component of the first harmonic of the axis error $\Delta\theta$ and the q-axis component of the second harmonic of the axis error $\Delta\theta$. The d-axis component, q-axis component of the first harmonic and the d-axis component and q-axis component of the second harmonic are respectively diminished by 0, and are respectively input into an integrator $K_{I\_P}/S$ for filtering by the integrator to remove the d-axis component, q-axis component of the first harmonic and the d-axis component and q-axis component of the second harmonic. Accordingly filtering results in which the first harmonic component and the second harmonic component are removed are obtained, which start to be represented by an angular velocity, wherein $\theta_{shift-P1}$ is a phase compensation angle of the first harmonic and $\theta_{shift-P2}$ is a phase compensation angle of the second harmonic; $\theta_{Shift-P1}$ and $\theta_{shift-P2}$ could be a pair of equal preset fixed values, or a pair of preset different values or a pair of variable angle values.

As a preferred embodiment, the two phase compensation angles $\theta_{Shift-P1}$ and $\theta_{shift-P2}$ are equal which are determined according to the closed-loop gain parameters $K_{P\_PLL}$ and $K_{I\_PLL}$ and the angular velocity command $\omega^*\_in$ of the phase-locked loop and satisfy:

$$\theta_{shift-Pn}=(\mathrm{a}K_{P\_PLL}+bK_{I-PLL}+\mathrm{c}\frac{K_{P\_PLL}}{K_{I\_PLL}}+d\omega^*\_in)^*\pi$$

wherein a, b, c, d are constant coefficients, and for a control system, the constant coefficients are fixed.

Each filtered result is subjected to inverse Fourier transform to obtain the angular velocity compensation amount P_out corresponding to the corrected shaft error $\Delta\theta'$ in which the first harmonic component and the second harmonic component are removed; to be specific, the filtered result in which the d-axis component of the first harmonic is subjected to inverse Fourier transform to obtain a result and the filtered result in which the q-axis component of the first harmonic is also subjected to inverse Fourier transform to obtain another result, and the two results are added to obtain the angular velocity compensation amount P_out1 corresponding to the corrected shaft error in which the first harmonic is removed; the filtered result in which the d-axis component of the second harmonic is subjected to inverse Fourier transform to obtain a result and the filtered result in which the q-axis component of the second harmonic is also subjected to inverse Fourier transform to obtain another result, and the two results are further added to obtain the angular velocity compensation amount P_out2 corresponding to the corrected shaft error in which the second harmonic is removed; a sum of the angular velocity compensation amount P_out1 and the angular velocity compensation amount P_out2 is the angular velocity compensation amount corresponding to the corrected shaft error in which the first harmonic and the second harmonic are removed, P_out = P_out1 + P_out2.

As a preferred embodiment, enable switches are added, which are used to control the filtering of the harmonic components. To be specific, as shown in Fig.4, Gain_1 and Gain_2 are enable switches configured to initiate or terminate the filtering algorithm: when the enable switches Gain_1 and Gain_2 are in a state to initiate the filtering algorithm of the first harmonic and the filtering algorithm of the second harmonic, the angular velocity compensation amount P_out = P_out1 + P_out2 corresponding to the corrected shaft error $\Delta\theta'$ in which the first harmonic and the second harmonic are removed is obtained; when the enable switches Gain_1 and Gain_2 are in a state to terminate the filtering algorithm of the first harmonic and the filtering algorithm of the second harmonic, the function to filter the shaft error is terminated and the angular velocity compensation amount P_out could not be output further ; when one enable switch is in a state to initiate the filtering algorithm and the other enable switch is in a state to terminate the filtering algorithm, the angular velocity compensation amount P_out obtained is either an angular velocity compensation amount in which merely the first harmonic is removed (enable switch Gain_1 is in a state to initiate the filtering algorithm and enable switch Gain_2 is in a state to terminate the filtering algorithm ) or an angular velocity compensation amount in which merely the second harmonic is removed (enable switch Gain_1 is in a state to terminate the filtering algorithm and enable switch Gain_2 is in a state to initiate the filtering algorithm ).

In an embodiment to merely remove the first harmonic component, the process disclosed in Fig.4 to extract and remove the first harmonic component could be directly adopted. It is undoubtedly that in the embodiment to merely remove the first harmonic component, an enable switch could be added to control the filtering of the first harmonic component and its specific implementation is shown in Fig.4 which is not repeated.

In a preferred embodiment, the steps that using a velocity fluctuation extraction algorithm to extract a part of angular fluctuation from the first angular velocity difference and calculating a difference between the first angular velocity difference and the part of angular fluctuation and the difference is determined as the filtered angular velocity specifically comprises: using the velocity fluctuation extraction algorithm to extract at least a first harmonic component in the first angular velocity difference and the first harmonic component is determined as the part of angular velocity fluctuation; calculating a difference between the first angular velocity difference and the first harmonic component and the difference is determined as the filtered angular velocity in which at least the first harmonic component is removed. In another preferred embodiment, the steps that using a velocity fluctuation extraction algorithm to extract a part of angular fluctuation from the first angular velocity difference and calculating a difference between the first angular velocity difference and the part of angular fluctuation and the difference is determined as the filtered angular velocity specifically comprises: using the velocity fluctuation extraction algorithm to extract a first harmonic component and a second harmonic component in the first angular velocity difference and a sum of the first harmonic component and the second harmonic component is determined as the part of angular velocity fluctuation; calculating a difference between the first angular velocity difference and the sum of the first harmonic component and the second harmonic component and the difference is determined as the filtered angular velocity in which the first harmonic component and the second harmonic component are removed. By means of filtering the first harmonic component in the first angular velocity, or filtering the first harmonic component and the second harmonic component, most of the fluctuation components in the first angular velocity difference could be removed, and the calculation amount is acceptable and filtering speed is fast.

Fig.5 is a logical block diagram of a specific example of the velocity fluctuation extraction algorithm shown in Fig.3. Specifically, Fig.5 is a logical block diagram of a specific example in which a first harmonic component and a second harmonic component are extracted from the first angular velocity difference to obtain the part of angular fluctuation. Referring to Fig.5, a method to obtain the part of angular fluctuation including the first harmonic component and the second harmonic component comprises:

Expanding the first angular velocity difference $\Delta\omega2$ by Fourier series to obtain a function expression of the first angular velocity difference $\Delta\omega2$ with respect to a mechanical angle $\theta m$; and this process could be implemented by methods disclosed by the prior art which will not be illustrated further.

Extracting the first harmonic component and the second harmonic component from the function expression;

Specifically, as shown in Fig.5, the step includes: multiplying the function expression by $\cos\theta_{m1}$; filtering the result by a low-pass filter $\frac{1}{1+T_{\_PD\_filter}S}$ ; performing inverse Fourier transform on the filtered result to obtain a d-axis component of a first harmonic; multiplying the function expression by $-\sin\theta_{m1}$; filtering the result by a low-pass filter $\frac{1}{1+T_{\_PD\_filter}S}$ ; performing inverse Fourier transform on the filtered result to obtain a q-axis component of a first harmonic; adding the d-axis component of the first harmonic and the q-axis component of the first harmonic to obtain a first harmonic component *K_out1* of the first angular velocity difference; similarly multiplying the function expression by $\cos\theta_{m2}$; filtering the result by a low-pass filter $\frac{1}{1+T_{\_PD\_filter}S}$ ; performing inverse Fourier transform on the filtered result to obtain a d-axis component of a second harmonic; multiplying the function expression by $-\sin\theta_{m2}$; filtering the result by a low-pass filter $\frac{1}{1+T_{\_PD\_filter}S}$ ; performing inverse Fourier transform on the filtered result to obtain a q-axis component of a second harmonic; adding the d-axis component of the second harmonic and the q-axis component of the second harmonic to obtain a second harmonic component *K_out2* of the second angular velocity difference; finally adding the first harmonic component *K_out1* and the second harmonic component *K_out2* to obtain a sum which is determined as the part of angular velocity fluctuation *K_out,* wherein $\theta_{m1}$ is a first harmonic mechanical angle in the function expression of Fourier series expansion, $\theta_{m2}$ is a second harmonic mechanical angle in the function expression of Fourier series expansion, and $\theta_{m2}=2\theta_{m1}$, $T_{\_PD\_filter}$ is a time constant of the low-pass filter.

After obtaining the part of angular velocity fluctuation *K_out* in which the first harmonic component and the second harmonic component are included, a difference between the first angular velocity difference $\Delta\omega2$ and the part of angular velocity fluctuation *K_out* is calculated to serve as the filtered angular velocity $\Delta\omega\_K$ and the filtered angular velocity $\Delta\omega\_K$ is the filtered angular velocity in which the first harmonic component and the second harmonic component are removed.

# EP 3 896 842 B1

As a preferred embodiment, enable switches are added, which are used to control the extraction of the harmonic components. To be specific, as shown in Fig.5, Gain_1 and Gain_2 are enable switches configured to initiate or terminate the extraction algorithm function: when the enable switches Gain_1 and Gain_2 are in a state to initiate the extraction function of the first harmonic and the extraction function of the second harmonic, the part of angular velocity fluctuation constituted by the first harmonic component and the second harmonic component is obtained: K_out = K_out1+K_out2; when the enable switches Gain_1 and Gain_2 are in a state to terminate the extraction function of the first harmonic and the extraction function of the second harmonic, the function to extract speed fluctuation is terminated and the part of angular velocity fluctuation K_out is 0; when one enable switch is in a state to initiate the extraction function and the other enable switch is in a state to terminate the extraction function, the part of angular velocity fluctuation K_out obtained is either a first harmonic component in the first angular velocity difference (enable switch Gain_1 is in a state to initiate the first harmonic extraction function and enable switch Gain_2 is in a state to terminate the extraction function) or a second harmonic component in the first angular velocity difference (enable switch Gain_1 is in a state to terminate the extraction function and enable switch Gain_2 is in a state to initiate the extraction function).

In an embodiment in which only the first harmonic component is extracted, the process of extracting the first harmonic component in Fig.5 can be directly adopted; and the control of the first harmonic extraction can also be realized by adding an enable switch, which could refer to Fig.5 and is not repeated further.

## Claims

1. A method for controlling speed fluctuation of single rotor compressor, **characterized in that** the method includes: a process to control the compressor according to a real-time angular velocity and a process to control the compressor according to a torque;

   the process to control the compressor according to a real-time angular velocity including:

   obtaining a shaft error $\Delta\theta$ which reflects a deviation of an actual position of a compressor rotor from an estimated position of a compressor rotor;

   filtering the shaft error $\Delta\theta$ to obtain a corrected shaft error $\Delta\theta$ in which at least a part of a shaft error fluctuation is eliminated and obtaining an angular velocity compensation amount P_out corresponding to the corrected shaft error $\Delta\theta$;

   compensating an angular velocity output $\Delta\omega$_PLL of a phase-locked loop regulator in a phase-locked loop for compressor control with the angular velocity compensation amount P_out to obtain a compensated angular velocity output $\Delta\omega$'; the compensated angular velocity output $\Delta\omega$' = P_out + $\Delta\omega$_PLL; wherein the angular velocity output $\Delta\omega$_PLL is the output of the phase-locked loop regulator with a difference between the shaft error $\Delta\theta$ and a target angle fluctuation amount as input to the phase-locked loop regulator;

   correcting the real-time angular velocity $\omega$1 which is used for compressor control according to the compensated angular velocity output and controlling the compressor according to the corrected real-time angular velocity $\omega$1 by adding the compensated angular velocity output $\Delta\omega$' to an angular velocity command to output the corrected real-time angular velocity $\omega$1 which is used for compressor control;

   wherein the step to filter the shaft error $\Delta\theta$ comprises:

   expanding the shaft error $\Delta\theta$ by Fourier series to obtain a function expression of the shaft error with respect to a mechanical angle $\theta m$;

   multiplying the function expression of the shaft error with $cos(\theta_{mn} + \theta_{shift-Pn})$ and $-sin(\theta_{mn} + \theta_{shift-Pn})$ respectively; extracting a d-axis component of a nth harmonic component of $\Delta\theta$ and a q-axis component of a nth harmonic component of $\Delta\theta$ by a low-pass filter or an integrator; wherein $\theta_{mn}$ is a mechanical angle of a nth harmonic and $\theta_{shift-Pn}$ is a phase compensation angle of a nth harmonic; and

   eliminating a d-axis component and a q-axis component of one or more harmonics to complete a filtering process of the shaft error $\Delta\theta$;

   the process to control the compressor according to a torque including:

   calculating a difference between a target angular velocity fluctuation amount and a feedback angular velocity to obtain a first angular velocity difference; wherein the feedback angular velocity is a sum of a direct current component P_DC of the angular velocity compensation P_out and the angular velocity output $\Delta\omega$_PLL of the phase-locked loop regulator;

   filtering the first angular velocity difference to obtain a filtered angular velocity in which at least a part of angular velocity fluctuation is eliminated;

   inputting the filtered angular velocity as an input to a speed loop regulator in a speed loop for compressor

9

control to obtain an output torque of the speed loop regulator;

controlling the compressor according to the output torque;

wherein the step that filtering the first angular velocity difference to obtain a filtered angular velocity in which at least a part of angular velocity fluctuation is eliminated further includes:

using a velocity fluctuation extraction algorithm to extract a part of angular velocity fluctuation in the first angular velocity difference, extracting a DC component of the part of angular velocity fluctuation, and calculating the difference between the first angular velocity difference and the DC component of the part of angular velocity fluctuation and the difference is determined as the filtered angular velocity.

2. The method according to claim 1, **characterized in that** the step to filter the shaft error $\Delta\theta$ to obtain a corrected shaft error $\Delta\theta'$ in which at least a part of fluctuation in the shaft error is eliminated further includes:
   filtering the shaft error $\Delta\theta$ to at least remove a d-axis component of a first harmonic and a q-axis component of a first harmonic to realize the filtering of the first harmonic component of $\Delta\theta$ and to obtain the corrected shaft error $\Delta\theta'$ in which at least the first harmonic component is removed.

3. The method according to claim 2, **characterized in that** the step to filter the shaft error $\Delta\theta$ to obtain a corrected shaft error $\Delta\theta'$ in which at least a part of fluctuation on the shaft error is eliminated further includes:
   filtering the shaft error $\Delta\theta$ to remove a d-axis component of a second harmonic and a q-axis component of a second harmonic to realize the filtering of the first harmonic component of $\Delta\theta$ and the second harmonic component of $\Delta\theta$ and to obtain the corrected shaft error $\Delta\theta'$ in which the first harmonic component and the second harmonic component are removed.

4. The method according to claim 1, **characterized in that**, the step that eliminating a d-axis component and a q-axis component of one or more harmonics to complete a filtering process of the shaft error $\Delta\theta$ further includes:

   extracting the d-axis component of the nth harmonic component of $\Delta\theta$ and the q-axis component of the nth harmonic component of $\Delta\theta$ by an integrator;
   the method further includes:
   each filtered result is subjected to inverse Fourier transform to obtain the angular velocity compensation amount P_out corresponding to the corrected shaft error $\Delta\theta'$ in which one or more harmonic components are removed.

5. The method according to claim 1, **characterized in that**, the phase compensation angle $\theta_{shift-Pn}$ is determined according to closed-loop gain parameters $K_{P\_PLL}$ and $K_{I\_PLL}$ and an angular velocity command $\omega^*\_in$ of the phase-locked loop, which satisfies:

$$\theta_{shift-Pn} = (aK_{P\_PLL} + bK_{I-PLL} + c\frac{K_{P\_PLL}}{K_{I\_PLL}} + d\omega^*\_in) * \pi \quad ;$$

wherein a, b, c, d are constant coefficients.

6. The method according to any one of claim 1 to 5, **characterized in that**, the step that using a velocity fluctuation extraction algorithm to extract a part of angular velocity fluctuation in the first angular velocity difference further includes:
   using a velocity fluctuation extraction algorithm to extract at least a first harmonic component in the first angular velocity difference and the first harmonic component is determined as the part of angular velocity fluctuation.

7. The method according to claim 6, **characterized in that**, the step that using a velocity fluctuation extraction algorithm to extract a first harmonic component in the first angular velocity difference further comprises:

   expanding the first angular velocity difference by Fourier series to obtain a function expression of the first angular velocity difference with respect to a mechanical angle;
   extracting d-axis component of a first harmonic and a q-axis component of a first harmonic from the function expression; and
   adding the d-axis component of the first harmonic and the q-axis component of the first harmonic to obtain a first harmonic component of the first angular velocity difference.

8. The method according to claim 6, **characterized in that**, the step that using a velocity fluctuation extraction algorithm to extract a part of angular velocity fluctuation in the first angular velocity difference further includes:
using the velocity fluctuation extraction algorithm to extract a second harmonic component in the first angular velocity difference and a sum of the first harmonic component and the second harmonic component is determined as the part of angular velocity fluctuation.

9. The method according to claim 8, **characterized in that**, the step that using a velocity fluctuation extraction algorithm to extract a second harmonic component in the first angular velocity difference further comprises:

expanding the first angular velocity difference by Fourier series to obtain a function expression of the first angular velocity difference with respect to a mechanical angle;
extracting d-axis component of a second harmonic and a q-axis component of a second harmonic from the function expression; and
adding the d-axis component of the second harmonic and the q-axis component of the second harmonic to obtain a second harmonic component of the first angular velocity difference.

10. The method according to claim 1, **characterized in that**, the target angular velocity fluctuation amount is 0.


**Patentansprüche**

1. Verfahren zum Steuern von Drehzahlschwankungen eines Einzelrotorkompressors, **dadurch gekennzeichnet, dass** das Verfahren umfasst: einen Prozess zum Steuern des Kompressors gemäß einer Echtzeit-Winkelgeschwindigkeit und einen Prozess zum Steuern des Kompressors gemäß einem Drehmoment;
wobei der Prozess zum Steuern des Kompressors gemäß einer Echtzeit-Winkelgeschwindigkeit umfasst:

Ermitteln eines Wellenfehlers $\Delta\theta$, der eine Abweichung einer tatsächlichen Position eines Kompressorrotors von einer geschätzten Position eines Kompressorrotors wiedergibt;
Filtern des Wellenfehlers $\Delta\theta$, um einen korrigierten Wellenfehler $\Delta\theta'$ zu ermitteln, bei dem zumindest ein Teil einer Wellenfehlerschwankung eliminiert wird, und Ermitteln eines Winkelgeschwindigkeitskompensations-betrags P_out, der dem korrigierten Wellenfehler $\Delta\theta'$ entspricht;
Kompensieren einer Winkelgeschwindigkeitsausgabe $\Delta\omega$_PLL eines Phasenregelkreisreglers in einem Phasenregelkreis zur Kompressorsteuerung mit dem Winkelgeschwindigkeitskompensationsbetrag P_out, um eine kompensierte Winkelgeschwindigkeitsausgabe $\Delta\omega'$ zu ermitteln; wobei die kompensierte Winkel-geschwindigkeitsausgabe $\Delta\omega'$ = P_out + $\Delta\omega$_PLL; wobei die Winkelgeschwindigkeitsausgabe $\Delta\omega$_PLL die Ausgabe des Phasenregelkreisreglers mit einer Differenz zwischen dem Wellenfehler $\Delta\theta$ und einem Zielwinkelschwankungsbetrag als Eingabe in den Phasenregelkreisregler ist;
Korrigieren der Echtzeit-Winkelgeschwindigkeit $\omega$1, die zur Kompressorsteuerung verwendet wird, gemäß der kompensierten Winkelgeschwindigkeitsausgabe und Steuern des Kompressors gemäß der korrigierten Echtzeit-Winkelgeschwindigkeit $\omega$1 durch Addieren der kompensierten Winkelgeschwindigkeitsausgabe $\Delta\omega'$ zu einem Winkelgeschwindigkeitsbefehl, um die korrigierte Echtzeit-Winkelgeschwindigkeit $\omega$1 auszugeben, die zur Kompressorsteuerung verwendet wird;
wobei der Schritt zum Filter des Wellenfehlers $\Delta\theta$ umfasst:

Erweitern des Wellenfehlers $\Delta\theta$ durch Fourier-Reihen, um einen Funktionsausdruck des Wellenfehlers in Bezug auf einen mechanischen Winkel $\theta$m zu ermitteln;
Multiplizieren des Funktionsausdrucks des Wellenfehlers mit $\cos(\theta_{mn} + \theta_{shift\text{-}Pn})$ bzw. $-\sin(\theta_{mn} + \theta_{shift\text{-}Pn})$;
Extrahieren einer d-Achsenkomponente einer n-ten harmonischen Komponente von $\Delta\theta$ und einer q-Achsenkomponente einer n-ten harmonischen Komponente von $\Delta\theta$ durch einen Tiefpassfilter oder einen Integrator; wobei $\theta_{mn}$ ein mechanischer Winkel einer n-ten Harmonischen ist und $\theta_{shift\text{-}Pn}$ ein Phasenkompensationswinkel einer n-ten Harmonischen ist; und
Eliminieren einer d-Achsenkomponente und einer q-Achsenkomponente einer oder mehrerer Harmonischen, um einen Filterungsprozess des Wellenfehlers $\Delta\theta$ abzuschließen;
wobei der Prozess zum Steuern des Kompressors gemäß einem Drehmoment umfasst:

Berechnen einer Differenz zwischen einem Zielwinkelgeschwindigkeitsschwankungsbetrag und einer Rücckopplungswinkelgeschwindigkeit, um eine erste Winkelgeschwindigkeitsdifferenz zu ermitteln;
wobei die Rückkopplungswinkelgeschwindigkeit eine Summe einer Gleichstromkomponente P_DC der Winkelgeschwindigkeitskompensation P_out und der Winkelgeschwindigkeits-ausgabe $\Delta\omega$_PLL des Phasenregelkreisreglers ist;

Filtern der ersten Winkelgeschwindigkeitsdifferenz, um eine gefilterte Winkelgeschwindigkeit zu ermitteln, bei der zumindest ein Teil der Winkelgeschwindigkeits-schwankung eliminiert wird;

Eingeben der gefilterten Winkelgeschwindigkeit als Eingabe in einen Drehzahlregelkreisregler in einem Drehzahlregelkreis zur Kompressorsteuerung, um ein Abtriebsdrehmoment des Drehzahlregelkreisreglers zu ermitteln;

Steuern des Kompressors gemäß dem Abtriebsdrehmoment;

wobei der Schritt zum Filtern der ersten Winkelgeschwindigkeitsdifferenz, um eine gefilterte Winkelgeschwindigkeit zu ermitteln, bei der zumindest ein Teil der Winkelgeschwindigkeitsschwankung eliminiert wird, ferner umfasst:

Verwenden eines Geschwindigkeitsschwankungs-Extraktionsalgorithmus, um einen Teil einer Winkelgeschwindigkeitsschwankung in der ersten Winkelgeschwindigkeitsdifferenz zu extrahieren, Extrahieren einer Gleichstromkomponente des Teils der Winkelgeschwindigkeitsschwankung, und Berechnen der Differenz zwischen der ersten Winkelgeschwindigkeits-differenz und der Gleichstromkomponente des Teils der Winkelgeschwindigkeitsschwankung, und wobei die Differenz als die gefilterte Winkelgeschwindigkeit bestimmt wird.

2. Verfahren nach Anspruch 1, **dadurch gekennzeichnet, dass** der Schritt zum Filtern des Wellenfehlers $\Delta\theta$, um einen korrigierten Wellenfehler $\Delta\theta'$ zu ermitteln, bei dem zumindest ein Teil der Schwankung in dem Wellenfehler eliminiert wird, ferner umfasst:

Filtern des Wellenfehlers $\Delta\theta$, um zumindest eine d-Achsenkomponente einer ersten Harmonischen und eine q-Achsenkomponente einer ersten Harmonischen zu entfernen, um das Filtern der ersten harmonischen Komponente von $\Delta\theta$ zu realisieren und um den korrigierten Wellenfehler $\Delta\theta'$ zu ermitteln, bei dem zumindest die erste harmonische Komponente entfernt wurde.

3. Verfahren nach Anspruch 2, **dadurch gekennzeichnet, dass** der Schritt zum Filtern des Wellenfehlers $\Delta\theta$, um einen korrigierten Wellenfehler $\Delta\theta'$ zu ermitteln, bei dem zumindest ein Teil der Schwankung auf dem Wellenfehler eliminiert wird, ferner umfasst:

Filtern des Wellenfehlers $\Delta\theta$, um eine d-Achsenkomponente einer zweiten Harmonischen und eine q-Achsenkomponente einer zweiten Harmonischen zu entfernen, um das Filtern der ersten harmonischen Komponente von $\Delta\theta$ und der zweiten harmonischen Komponente von $\Delta\theta$ zu realisieren und um den korrigierten Wellenfehler $\Delta\theta'$ zu ermitteln, bei dem die erste harmonische Komponente und die zweite harmonische Komponente entfernt wurden.

4. Verfahren nach Anspruch 1, **dadurch gekennzeichnet, dass** der Schritt zum Eliminieren einer d-Achsenkomponente und einer q-Achsen-komponente einer oder mehrerer Harmonischen, um einen Filterungsprozess des Wellenfehlers zu vervollständigen, ferner umfasst:

Extrahieren der d-Achsenkomponente der n-ten harmonischen Komponente von $\Delta\theta$ und der q-Achsenkomponente der n-ten harmonischen Komponente von $\Delta\theta$ durch einen Integrator;

wobei das Verfahren ferner umfasst:

jedes gefilterte Ergebnis wird einer inversen FourierTransformation unterzogen, um den Winkel-geschwindigkeitskompensationsbetrag P_out zu ermitteln, der dem korrigierten Wellenfehler $\Delta\theta'$ entspricht, bei dem eine oder mehrere harmonische Komponenten entfernt wurden.

5. Verfahren nach Anspruch 1, **dadurch gekennzeichnet, dass** der Phasenkompensationswinkel $\theta_{shift\text{-}Pn}$ gemäß Verstärkungsparametern eines geschlossenen Regel-kreises $K_{P\_PPL}$ und $K_{I\_PLL}$ und einem Winkelgeschwindig-keitsbefehl $\omega^*$_in des Phasen-regelkreises bestimmt wird, welcher erfüllt:

$$\theta_{shift-Pn} = \left( aK_{P\_PLL} + bK_{I-PLL} + c\frac{K_{P\_PLL}}{K_{I\_PLL}} + d\omega*\_in \right) * \pi$$

wobei a, b, c, d konstante Koeffizienten sind.

6. Verfahren nach einem der Ansprüche 1 bis 5, **dadurch gekennzeichnet, dass** der Schritt zum Verwenden eines Geschwindigkeitsschwankungs-Extraktionsalgorithmus, um einen Teil einer Winkelgeschwindigkeitsschwankung in der ersten Winkelgeschwindigkeitsdifferenz zu extrahieren, ferner umfasst:

Verwenden eines Geschwindigkeitsschwankungs-Extraktionsalgorithmus, um mindestens eine erste harmonische Komponente in der ersten Winkelgeschwindigkeitsdifferenz zu extrahieren, und wobei die erste harmonische Komponente als der Teil der Winkelgeschwindigkeitsschwankung bestimmt wird.

7. Verfahren nach Anspruch 6, **dadurch gekennzeichnet, dass** der Schritt zum Verwenden eines Geschwindigkeitsschwankungs-Extraktionsalgorithmus, um eine erste harmonische Komponente in der ersten Winkelgeschwindigkeitsdifferenz zu extrahieren, ferner umfasst:

Erweitern der ersten Winkelgeschwindigkeitsdifferenz durch Fourier-Reihen, um einen Funktionsausdruck der ersten Winkelgeschwindigkeitsdifferenz in Bezug auf einen mechanischen Winkel ermitteln;
Extrahieren einer d-Achsenkomponente einer ersten Harmonischen und einer q-Achsenkomponente einer ersten Harmonischen aus dem Funktionsausdruck; und
Addieren der d-Achsenkomponente der ersten Harmonischen und der q-Achsenkomponente der ersten Harmonischen, um eine erste harmonische Komponente der ersten Winkelgeschwindigkeitsdifferenz zu ermitteln.

8. Verfahren nach Anspruch 6, **dadurch gekennzeichnet, dass** der Schritt zum Verwenden eines Geschwindigkeitsschwankungs-Extraktionsalgorithmus, um einen Teil einer Winkelgeschwindigkeitsschwankung in der ersten Winkelgeschwindigkeitsdifferenz zu extrahieren, ferner umfasst:
Verwenden des Geschwindigkeitsschwankungs-Extraktions--algorithmus, um eine zweite harmonische Komponente in der ersten Winkelgeschwindigkeitsdifferenz zu extrahieren, und wobei eine Summe der ersten harmonischen Komponente und der zweiten harmonischen Komponente als der Teil der Winkelgeschwindigkeits-schwankung bestimmt wird.

9. Verfahren nach Anspruch 8, **dadurch gekennzeichnet, dass** der Schritt zum Verwenden eines Geschwindigkeitsschwankungs-Extraktionsalgorithmus, um eine zweite harmonische Komponente in der ersten Winkel-geschwindigkeitsdifferenz zu extrahieren, ferner umfasst:

Erweitern der ersten Winkelgeschwindigkeitsdifferenz durch Fourier-Reihen, um einen Funktionsausdruck der ersten Winkelgeschwindigkeitsdifferenz in Bezug auf einen mechanischen Winkel zu ermitteln;
Extrahieren einer d-Achsenkomponente einer zweiten Harmonischen und einer q-Achsenkomponente einer zweiten Harmonischen aus dem Funktionsausdruck; und
Addieren der d-Achsenkomponente der zweiten Harmonischen und der q-Achsenkomponente der zweiten Harmonischen, um eine zweite harmonische Komponente der ersten Winkelgeschwindigkeitsdifferenz zu ermitteln.

10. Verfahren nach Anspruch 1, **dadurch gekennzeichnet, dass** der Zielwinkelgeschwindigkeitsschwankungsbetrag 0 ist.

**Revendications**

1. Procédé pour contrôler les fluctuations de la vitesse de rotation d'un compresseur à rotor unique, **caractérisé par le fait que** le procédé comprend : un processus pour commander le compresseur en fonction d'une vitesse angulaire en temps réel et un processus pour commander le compresseur en fonction d'un couple ;
le processus pour commander le compresseur en fonction d'une vitesse angulaire en temps réel, comprenant :

obtenir une erreur d'arbre $\Delta\theta$ qui reflète un écart d'une position réelle d'un rotor de compresseur par rapport à une position estimée d'un rotor de compresseur;
filtrer l'erreur d'arbre $\Delta\theta$ pour obtenir une erreur d'arbre corrigée $\Delta\theta'$ dans laquelle au moins une partie de la fluctuation de l'erreur d'arbre est éliminée et pour obtenir une valeur de compensation de vitesse angulaire P_out correspondant à l'erreur d'arbre corrigée $\Delta\theta'$ ;
compenser une sortie de vitesse angulaire $\Delta\omega$_PLL d'un régulateur à boucle à verrouillage de phase dans une boucle à verrouillage de phase pour commande de compresseur avec la valeur de compensation de vitesse angulaire P_out afin d'obtenir une sortie de vitesse angulaire $\Delta\omega$_PLL compensée $\Delta\omega'$ ; la sortie de vitesse angulaire compensée étant $\Delta\omega' = $ P_out $+ \Delta\omega$_PLL ; dans laquelle la sortie de vitesse angulaire $\Delta\omega$_PLL est la sortie du régulateur à boucle à verrouillage de phase avec comme entrées dans le régulateur à boucle à verrouillage de phase une différence entre l'erreur d'arbre $\Delta\theta$ et une valeur cible de fluctuation d'angle ;
corriger la vitesse angulaire en temps réel $\omega1$ qui est utilisée pour la commande du compresseur, en fonction de la sortie de vitesse angulaire compensée, et commander le compresseur en fonction de la vitesse angulaire en temps réel corrigée ω1 en ajoutant la sortie de vitesse angulaire compensée Δω' à une commande de vitesse angulaire pour délivrer la vitesse angulaire en temps réel corrigée ωI qui est utilisée pour la commande du compresseur ;

dans lequel l'étape de filtrage de l'erreur d'arbre Δθ comprend :

développer en série de Fourier l'erreur d'arbre Δθ pour obtenir une expression sous forme de fonction de l'erreur d'arbre par rapport à un angle mécanique θm ;
multiplier l'expression sous forme de fonction de l'erreur d'arbre par $\cos(\theta_{mn}+\theta_{shift\text{-}pn})$ et $-\sin(\theta_{mn}+\theta_{shift\text{-}pn})$ respectivement ; extraire une composante d'axe d d'une nième composante harmonique de Δθ et une composante d'axe q d'une nième composante harmonique de Δθ au moyen d'un filtre passe-bas ou d'un intégrateur ; dans lequel $\theta_{mn}$ est un angle mécanique d'une nième harmonique et $\theta_{shift\text{-}pn}$ est un angle de compensation de phase d'une nième harmonique ; et
éliminer une composante d'axe d et une composante d'axe q d'une ou de plusieurs harmoniques pour compléter un processus de filtrage de l'erreur d'arbre Δθ ;
le processus de commande du compresseur en fonction d'un couple comprenant :

calculer une différence entre une valeur cible de fluctuation de vitesse angulaire et une vitesse angulaire cible de retour pour obtenir une première différence de vitesse angulaire ; dans laquelle la vitesse angulaire de retour est une somme d'une composante de courant continu P_DC de la compensation de vitesse angulaire P_out et de la sortie de vitesse angulaire Δω_PLL du régulateur à boucle à verrouillage de phase ;
filtrer la première différence de vitesse angulaire pour obtenir une vitesse angulaire filtrée dans laquelle au moins une partie de la fluctuation de vitesse angulaire est éliminée ;
entrer la vitesse angulaire filtrée en tant qu'entrée d'un régulateur à boucle de vitesse dans une boucle de vitesse pour commande du compresseur afin d'obtenir un couple de sortie du régulateur à boucle de vitesse ;
commander le compresseur en fonction du couple de sortie ;
dans lequel l'étape, qui consiste à filtrer la première différence de vitesse angulaire pour obtenir une vitesse angulaire filtrée dans laquelle au moins une partie de la fluctuation de la vitesse angulaire est éliminée, comprend en outre :

utiliser un algorithme d'extraction de fluctuation de vitesse pour extraire de la première différence de vitesse angulaire une partie de la fluctuation de la vitesse angulaire, extraire une composante de courant continu de la partie de fluctuation de la vitesse angulaire, et calculer la différence entre la première différence de vitesse angulaire et la composante de courant continu de la partie de fluctuation de vitesse angulaire, et on détermine que la différence est la vitesse angulaire filtrée.

2. Procédé selon la revendication 1, **caractérisé en ce que** l'étape de filtrage de l'erreur d'arbre Δθ, afin d'obtenir une erreur d'arbre corrigée Δθ' dans laquelle au moins une partie de la fluctuation de l'erreur d'arbre est éliminée, comprend en outre :
filtrer l'erreur d'arbre Δθ pour au moins retirer une composante d'axe d d'une première harmonique et une composante d'axe q d'une première harmonique afin de réaliser le filtrage de la première composante harmonique de Δθ et d'obtenir l'erreur d'arbre corrigée Δθ' dans laquelle au moins la première composante harmonique est retirée.

3. Procédé selon la revendication 2, **caractérisé en ce que** l'étape de filtrage de l'erreur d'arbre Δθ, pour obtenir une erreur d'arbre corrigée Δθ' dans laquelle au moins une partie de la fluctuation de l'erreur d'arbre est éliminée, comprend en outre :
filtrer l'erreur d'arbre Δθ pour retirer une composante d'axe d d'une seconde harmonique et une composante d'axe q d'une seconde harmonique pour réaliser le filtrage de la première composante harmonique de Δθ et de la seconde composante harmonique de Δθ et pour obtenir l'erreur d'arbre corrigée Δθ' dans laquelle la première composante harmonique et la seconde composante harmonique sont retirées.

4. Procédé selon la revendication 1, **caractérisé en ce que** l'étape d'élimination d'une composante d'axe d et d'une composante d'axe q d'une ou de plusieurs harmoniques pour compléter un processus de filtrage de l'erreur d'arbre Δθ comprend en outre :

extraire par un intégrateur la composante d'axe d de la nième composante harmonique de Δθ et la composante d'axe q de la nième composante harmonique de $\Delta\theta$;

le procédé comprend en outre :

chaque résultat filtré est soumis à une transformée de Fourier inverse pour obtenir la valeur de compensation de vitesse angulaire P_out correspondant à l'erreur d'arbre corrigée $\Delta\theta$' dans laquelle une ou plusieurs composantes harmoniques sont retirées.

5. Procédé selon la revendication 1, **caractérisé en ce que** l'angle de compensation de phase $\theta_{shift-Pn}$ est déterminé en fonction des paramètres de gain en boucle fermée $K_{p\_PLL}$ et $K_{r\_PLL}$ et d'une commande de vitesse angulaire $\omega^*\_in$ de la boucle à verrouillage de phase, qui satisfait :

$\theta_{shift-Pn} = (aK_{p\_PLL} + bK_{r\_PLL} + cK_{p\_PLL}/K_{r\_PLL} + d\omega^*\_in)\,{}^*\pi$ dans laquelle a, b, c, d sont des coefficients constants.

6. Procédé selon l'une quelconque des revendications 1 à 5, **caractérisé en ce que** l'étape consistant à utiliser un algorithme d'extraction de fluctuation de vitesse pour extraire de la première différence de vitesse angulaire une partie de la fluctuation de vitesse angulaire comprend en outre :

utiliser un algorithme d'extraction de fluctuation de vitesse pour extraire de la première différence de vitesse angulaire au moins une première composante harmonique, et la première composante harmonique est déterminée comme étant la partie de la fluctuation de vitesse angulaire.

7. Procédé selon la revendication 6, **caractérisé par le fait que** l'étape qui consiste à utiliser un algorithme d'extraction de fluctuation de vitesse pour extraire de la première différence de vitesse angulaire une première composante harmonique comprend en outre :

développer en série de Fourier la première différence de vitesse angulaire pour obtenir une expression sous forme de fonction de la première différence de vitesse angulaire par rapport à un angle mécanique ;

extraire de l'expression sous forme de fonction la composante d'axe d d'une première harmonique et une composante d'axe q d'une première harmonique ; et

ajouter la composante d'axe d de la première harmonique et la composante d'axe q de la première harmonique pour obtenir une première composante harmonique de la première différence de vitesse angulaire.

8. Procédé selon la revendication 6, **caractérisé par le fait que** l'étape consistant à utiliser un algorithme d'extraction de fluctuation de vitesse pour extraire de la première différence de vitesse angulaire une partie de la fluctuation de vitesse angulaire comprend en outre :

utiliser l'algorithme d'extraction de fluctuation de vitesse pour extraire de la première différence de vitesse angulaire une deuxième composante harmonique, et une somme de la première composante harmonique et de la deuxième composante harmonique est déterminée comme étant la partie de la fluctuation de la vitesse angulaire.

9. Procédé selon la revendication 8, **caractérisé par le fait que** l'étape consistant à utiliser un algorithme d'extraction de fluctuation de vitesse pour extraire de la première différence de vitesse angulaire une deuxième composante harmonique comprend en outre :

développer en série de Fourier la première différence de vitesse angulaire pour obtenir une expression sous forme de fonction de la première différence de vitesse angulaire par rapport à un angle mécanique ;

extraire de l'expression sous forme de fonction la composante d'axe d d'une seconde harmonique et la composante d'axe q d'une seconde harmonique ; et

ajouter la composante d'axe d de la seconde harmonique et la composante d'axe q de la seconde harmonique pour obtenir une deuxième composante harmonique de la première différence de vitesse angulaire.

10. Procédé selon la revendication 1 **caractérisé par le fait que** la valeur cible de fluctuation de vitesse angulaire est 0.

Obtaining a shaft error which reflects a deviation of an actual position of a compressor rotor from an estimated position of a compressor rotor ⌐∿ 11

↓

Filtering the shaft error to obtain a corrected shaft error in which at least a part of a shaft error fluctuation is eliminated ⌐∿ 12

↓

Obtaining an angular velocity compensation amount according to the corrected shaft error ⌐∿ 13

↓

Compensating an output angular velocity of the phase-locked loop regulator in the phase-locked loop for compressor control with the angular velocity compensation amount so as to obtain a compensated angular velocity output ⌐∿ 14

↓

Correcting the real-time angular velocity which is used for compressor control according to the compensated output angular velocity and controlling the compressor according to the corrected real-time angular velocity ⌐∿ 15

# Fig.1

Calculating a difference between the target angular velocity fluctuation amount and a feedback angular velocity to obtain a first angular velocity difference — 21

Filtering the first angular velocity difference to obtain a filtered angular velocity in which at least a part of angular velocity fluctuation is eliminated — 22

Inputting the filtered angular velocity as an input to the speed loop regulator in the speed loop for compressor control to obtain an output torque of the speed loop regulator — 23

Controlling the compressor in the air conditioner according to the output torque — 24

## Fig.2

**Fig.3**

**Fig.4**

**Fig.5**

**REFERENCES CITED IN THE DESCRIPTION**

**Patent documents cited in the description**

- CN 105450098